(19) Europäisches Patentamt
European Patent Office
Office européen des brevets

(11) **EP 1 695 160 B1**

(12) **FASCICULE DE BREVET EUROPEEN**

(45) Date de publication et mention
de la délivrance du brevet:
**04.02.2009 Bulletin 2009/06**

(51) Int Cl.:
***G05B 19/23*** *(2006.01)*

(21) Numéro de dépôt: **04816425.5**

(22) Date de dépôt: **17.12.2004**

(86) Numéro de dépôt international:
**PCT/FR2004/003291**

(87) Numéro de publication internationale:
**WO 2005/062143 (07.07.2005 Gazette 2005/27)**

(54) **PROCEDE ET DISPOSITIF DE COMMANDE DES DEPLACEMENTS D'UNE PARTIE MOBILE D'UN ROBOT MULTI-AXES**

VERFAHREN UND EINRICHTUNG ZUR STEUERUNG VON VERSCHIEBUNGEN DES BEWEGLICHEN TEILS EINES MEHRACHSENROBOTERS

METHOD AND DEVICE FOR CONTROLLING DISPLACEMENTS OF THE MOVABLE PART OF A MULTIAXIS ROBOT

(84) Etats contractants désignés:
**AT BE BG CH CY CZ DE DK EE ES FI FR GB GR HU IE IS IT LI LT LU MC NL PL PT RO SE SI SK TR**

(30) Priorité: **19.12.2003 FR 0315068**

(43) Date de publication de la demande:
**30.08.2006 Bulletin 2006/35**

(73) Titulaire: **STAUBLI FAVERGES**
**74210 Faverges (FR)**

(72) Inventeur: **JOLY, Luc**
**F-74210 Faverges (FR)**

(74) Mandataire: **Myon, Gérard Jean-Pierre et al**
**Cabinet Lavoix Lyon**
**62, rue de Bonnel**
**69448 Lyon Cedex 03 (FR)**

(56) Documents cités:
**EP-A- 0 349 291**

• **PATENT ABSTRACTS OF JAPAN vol. 2000, no. 21, 3 août 2001 (2001-08-03) & JP 2001 105152 A (KAWASAKI HEAVY IND LTD), 17 avril 2001 (2001-04-17)**

EP 1 695 160 B1

## Description

L'invention a trait à un procédé et à un dispositif de commande des déplacements d'une partie mobile d'un robot multi-axes le long d'une trajectoire.

Dans le domaine de la commande des robots multi-axes, il est connu de commander un robot multi-axes grâce à des boucles d'asservissement de type PID (proportionnelle intégrale dérivée) en position, vitesse et courant, afin de faire évoluer la partie terminale d'un robot, qui peut porter un outil ou un préhenseur, sur une trajectoire de géométrie et de profil de vitesse déterminés. Il est également connu de commander un tel robot en diminuant la raideur d'asservissement sur chaque axe, afin de permettre une variation de la position du bras en fonction des efforts d'interaction entre les parties mobiles du robot et leur environnement. Il est en particulier connu, par exemple de US-A-5,742,138, de paramétrer la raideur d'un bras de robot multi-axes dans un système de coordonnés rectangulaires, de mesurer une erreur de position, de calculer un effort et de corriger la position de la partie mobile du robot afin d'obtenir une certaine souplesse de l'organe terminal. Une telle souplesse peut être utilisée pour réaliser des opérations de manipulation de pièces telle qu'un polissage, un ébavurage ou le déchargement d'une presse pour lesquels un effort de contact peut contrarier le mouvement programmé du robot.

Il est également connu de donner un effort de consigne dans un système de coordonnées rectangulaires afin de réaliser une opération à effort contrôlé le long d'une trajectoire, par exemple pour une opération d'ébavurage ou de polissage.

Dans les systèmes connus, on prévoit parfois que l'interface de programmation de trajectoire permette de spécifier des paramètres tels que la vitesse ou l'accélération de la partie mobile sur sa trajectoire, ces paramètres déterminant la position de la partie terminale du bras du robot le long de sa trajectoire en fonction du temps.

Il est également connu de US-A-4,874,997 de contrôler de façon numérique un moteur brushless d'articulation de robot par modulation de largeur d'impulsions.

Dans ces systèmes connus, il n'est pas possible de programmer de façon aisée un robot multi-axes pour que la trajectoire de déplacement de sa partie terminale puisse être contrôlée en vitesse et accélération d'une part, et en effort tangentiel à la trajectoire du point de contact de sa partie mobile avec son environnement d'autre part, tout en respectant des valeurs de vitesse et d'accélération compatibles avec la structure mécanique du robot.

Il est également connu de EP-A-0 349 291 de faire dévier un robot de la trajectoire qu'il a apprise pour respecter une consigne d'effort en fonction de la géométrie réelle d'une pièce à traiter. Dans ce cas, le contrôle de l'effort est privilégié par rapport au suivi de la trajectoire, ce qui n'est pas compatible avec certaines utilisations dans lesquelles la trajectoire doit être rigoureusement suivie.

C'est à ces inconvénients qu'entend plus particulièrement remédier l'invention en proposant un procédé dans lequel les interactions avec l'environnement de la partie mobile d'un robot, notamment une pièce ou un outil porté par celui-ci, sont contrôlées avec précision.

Dans cet esprit, l'invention concerne un procédé de commande des déplacements d'une partie mobile d'un robot multi-axes le long d'une trajectoire dans lequel sont des prévues des étapes consistant à :

- fournir à un générateur de trajectoire des instructions de mouvements incluant au moins des informations relatives à la géométrie de la trajectoire et à des consignes d'effort ;
- calculer un signal dit d'effort extérieur représentant au moins une composante de l'effort exercé par la partie mobile sur son environnement ;
- fournir, à une fréquence d'échantillonnage prédéterminée, le signal d'effort extérieur au générateur de trajectoire ;
- calculer, au moyen du générateur de trajectoire et à une fréquence d'échantillonnage prédéterminée, des consignes de mouvement le long de la trajectoire de façon à minimiser l'écart entre la projection de l'effort extérieur sur la tangente à la trajectoire et la projection de la consigne sur cette tangente ; et
- fournir les consignes de mouvement à un moyen d'asservissement qui permet de mettre en mouvement au moins un axe du robot conformément à ces consignes.

L'asservissement en effort tangentiel permet donc de conserver la géométrie de la trajectoire, tout en adaptant la vitesse de la partie mobile sur cette trajectoire.

Selon des aspects avantageux, un procédé de commande des déplacements d'une partie mobile d'un robot multi-axes peut incorporer une ou plusieurs des caractéristiques suivantes:

- Le signal d'effort extérieur est calculé à partir d'une information représentant le courant circulant dans au moins un actionneur du robot.
- Il est prévu une étape consistant à utiliser un modèle dynamique du robot lors du calcul du signal d'efforts extérieur.
- Il est prévu une étape consistant à fournir au générateur de trajectoire au moins une valeur limite de vitesse et/ou une valeur limite d'accélération pour prise en compte lors du calcul des consignes de mouvement, de telle sorte que ces consignes soient conformes à cette ou ces valeurs limites.

L'invention concerne également un dispositif permettant de mettre en oeuvre un procédé décrit ci-dessus et, plus spécifiquement, un dispositif qui comprend:

- un générateur de trajectoire apte à calculer des consignes de mouvements en fonction d'instruction de mouvements incluant au moins des informations relatives à la géométrie de la trajectoire et à des consignes d'efforts et
- un estimateur d'effort apte à générer un signal d'effort extérieur représentant au moins une composante de l'effort exercée par la partie mobile sur son environnement et à fournir ce signal au générateur de trajectoire, à une fréquence d'échantillonnage prédéterminée, alors que le générateur de trajectoire est apte à calculer les consignes de mouvements le long de la trajectoire, à une fréquence d'échantillonnage prédéterminée, de façon à minimiser l'écart entre la projection de l'effort extérieur sur la tangente et la trajectoire et la projection de la consigne d'effort sur cette tangente, ces consignes de mouvement étant fournies à un moyen d'asservissement permettant de mettre en mouvement au moins un axe du robot.

De façon avantageuse, ce dispositif comprend un moyen interpréteur de programmes apte à exécuter des programmes qui comportent des instructions de mouvements permettant de spécifier au moins la géométrie de la trajectoire et des consignes d'efforts.

L'invention sera mieux comprise et d'autres avantages de celle-ci apparaîtront plus clairement à la lumière de la description qui va suivre d'un mode de réalisation d'un procédé conforme à son principe, donné uniquement à titre d'exemple et fait en référence aux dessins annexés dans lesquels :

- La figure 1 est une représentation schématique de principe d'un robot multi-axes en train de déplacer une fraise le long d'une trajectoire, grâce à un procédé conforme à l'invention.
- La figure 2 est une représentation schématique de principe de la répartition des efforts au niveau d'une partie mobile du robot de la figure 1.
- La figure 3 est un schéma-bloc de principe représentant le fonctionnement général de l'invention ;
- La figure 4 est un schéma-bloc de principe représentant le transfert des consignes de position au système d'asservissement correspondant pour chaque moteur ;
- La figure 5 est un schéma-bloc de principe représentant l'asservissement de chaque moteur ;
- La figure 6 est une représentation de la méthode utilisée pour estimer les efforts extérieurs et
- La figure 7 représente l'algorithme utilisé par le générateur de trajectoire pour générer les consignes de mouvements.

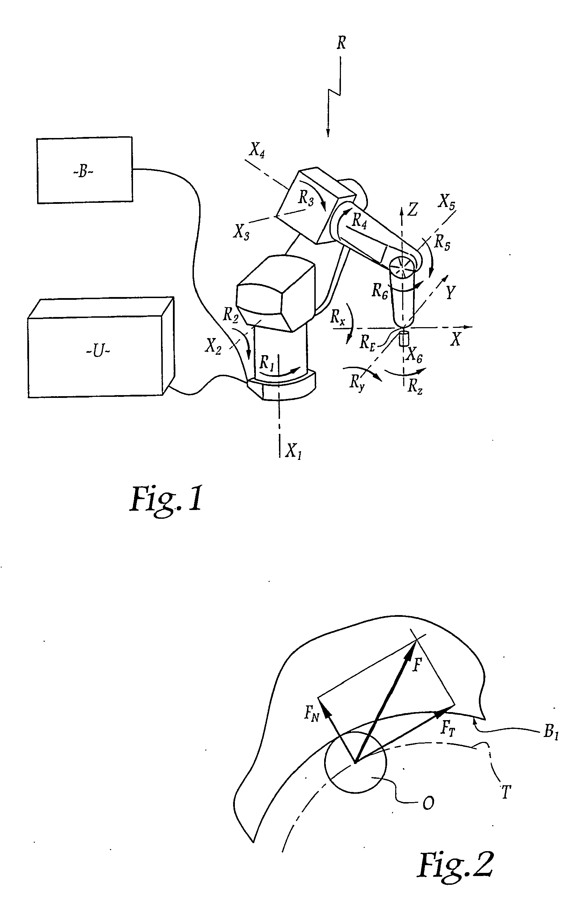

Le robot R représenté à la figure 1 est un robot multi-axes à six articulations. Il peut évoluer avec six degrés de liberté. Le robot R peut être commandé en mode cartésien, auquel cas ses degrés de liberté peuvent être trois degrés de liberté en translation selon la direction de trois axes X, Y et Z et trois degrés de liberté en rotation $R_X$, $R_Y$, et $R_Z$ autour des axes précités. Le robot R peut également être commandé en mode articulaire, auquel cas ses degrés de liberté peuvent être six rotations $R_1$, $R_2$, $R_3$, $R_4$, $R_5$ et $R_6$ autour de ses six axes d'articulation $X_1$, $X_2$, $X_3$, $X_4$, $X_5$ et $X_6$.

Ce robot est associé à une unité de commande U qui contrôle son fonctionnement pendant les phases d'apprentissage et d'utilisation.

Un boîtier B de commande manuelle peut également être utilisé pendant les phases d'apprentissage.

Dans l'exemple représenté, le robot R porte un outil O, tel qu'une fraise, qu'il convient de déplacer selon une trajectoire T.

Comme il ressort plus particulièrement de la figure 2, on considère que l'outil O est déplacé par le robot R le long du bord $B_1$ d'une pièce à fraiser. La trajectoire T est globalement parallèle à ce bord. On note F l'effort exercé par l'outil O sur le bord $B_1$. On note $F_T$ la composante de cet effort tangente à la trajectoire T et $F_N$ la composante de cet effort normale à la trajectoire T.

Conformément à l'invention, on utilise la valeur de la composante $F_T$ dans le procédé de commande des déplacements de l'outil O.

Dans le descriptif suivant F est utilisé au sens large et représente le vecteur des couples articulaires du bras robot ou le torseur des effort extérieurs intégrant les efforts cartésiens Fx,Fy,Fz, et les couples cartésiens Mx,My,Mz.

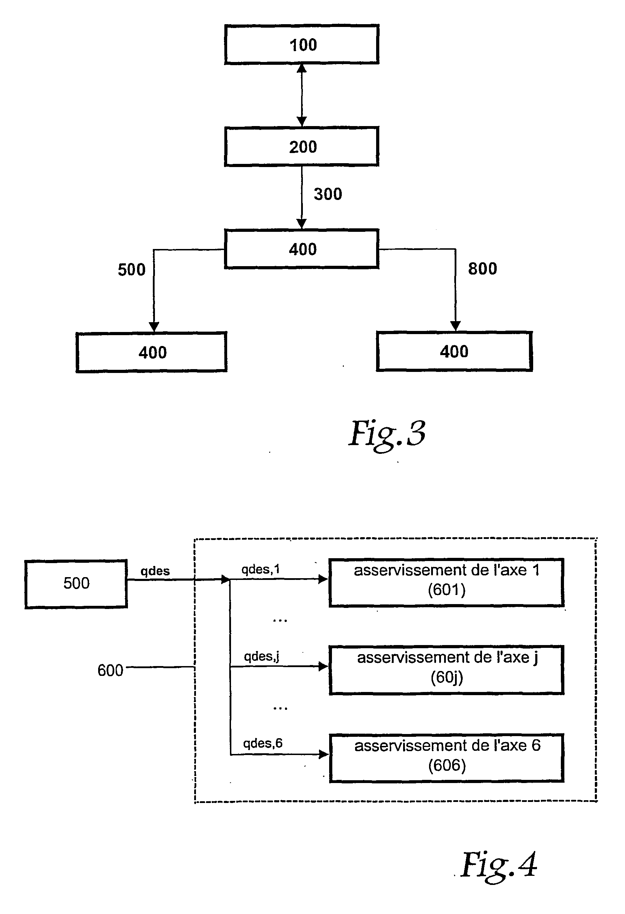

Comme représenté à la figure 3 l'environnement de programmation 100 permet à l'utilisateur du système de programmer le robot de manière à ce qu'il réalise les opérations souhaitées. Ces opérations sont décrites par des programmes. L'environnement de programmation permet d'apprendre les positions successives que doit atteindre le robot, d'écrire les programmes décrivant l'enchaînement des mouvements, de mettre au point ces programmes, de démarrer leur exécution, de les arrêter, etc...

Pour exécuter les programmes, l'environnement de programmation fait appel à un interpréteur de programmes 200. Celui-ci exécute les programmes destinés à réaliser une tâche par le robot. Les programmes exécutés contiennent, entre autre, des instructions 300, dites instructions de mouvement. Elles décrivent les types de mouvements que doit faire le robot (ligne droite, cercle,... etc), ainsi que les différent paramètres les caractérisant (point d'arrivée, vitesse, effort,...).

Ces instructions de mouvement 300 sont transférées au générateur de trajectoire 400. Celui est chargé de leur exécution, c'est-à-dire qu'il doit générer régulièrement (typiquement toutes les 4 millisecondes), en fonction de leur type et de leurs paramètres, des consignes de mouvement 500. Ces consignes de mouvement 500 représentent la trajectoire que doit suivre le robot à chaque instant. Le robot industriel asservi 600 comprend un bras industriel à six axes ainsi que son système d'asservissement. Le système d'asservissement est conçu de manière à piloter les six moteurs du robot (un pour chaque axe), de sorte que la trajectoire réelle du robot suive au mieux la trajectoire définie par les consignes de mouvement 500.

Dans certaines applications, l'organe terminal du robot industriel 600 interagit mécaniquement avec son environnement : par exemple, la pièce qu'il est en train de fraiser. L'estimateur d'effort extérieur 700 est un moyen d'obtenir un signal, dit effort extérieur 800, représentant la valeur et la direction des efforts exercés par le robot sur son environnement. Ce signal est renvoyé au générateur de trajectoire 400 en temps réel (typiquement toutes les 4 millisecondes). Ce dernier utilise ce retour d'information pour modifier les consignes de mouvement, de manière à réguler les efforts d'interactions.

L'environnement de programmation comporte un boîtier de commande qui permet de déplacer le robot dans un mode interactif, de manière à pouvoir apprendre les différentes positions que devra prendre le robot. Il sert aussi d'interface de programmation pour éditer et mettre au point les programmes. Le langage utilisé pour l'écriture de ces programmes est un langage textuel, mais d'autres types de langages (graphique par exemple) pourraient être utilisés dans le cadre de cette invention.

Le langage utilisé contient des instructions courantes dans les langages de programmation de robot, qui permettent de spécifier différents types de mouvement, de contrôler leur vitesse et accélération ainsi que leur enchaînements.

On présente maintenant, à titre d'exemple, ici deux autres instructions relatives à l'invention.

L'instruction :

MOVEJF(position, outil, params, force) spécifie que le robot doit déplacer l'outil qu'il porte définie par le paramètre « outil », depuis la position finale du mouvement précédent jusqu'à la position définie par le paramètre « position ». Le déplacement se fait en mode articulaire, c'est à dire qu'il y a un rapport de proportionnalité constant entre les déplacements de chaque axe durant le mouvement. Le paramètre « params » spécifie les vitesses et accélérations à ne pas dépasser durant le mouvement. Il spécifie aussi si le mouvement doit être enchaîné au mouvement suivant. Enfin, le paramètre « force » spécifie la valeur désirée de l'effort tangentiel à la trajectoire durant le mouvement. Dans la mesure où les limites de vitesse et d'accélération définies par « params » ne sont pas atteintes, le robot doit adapter son déplacement le long de la trajectoire de manière à maintenir la valeur de l'effort tangentiel la plus proche possible de la valeur spécifiée par le paramètre « force ».

L'instruction:

MOVELF(position, outil, params, force) est similaire. La seule différence est que le mouvement doit s'exécuter en ligne droite.

On peut imaginer facilement des instructions similaires, définissant des trajectoires circulaires, ou définies par des splines ou autres...

Il est important pour l'invention que ces instructions définissent, d'une part, la géométrie de la trajectoire que doit suivre le robot et, d'autre part, la valeur de l'effort tangentiel que doit exercer le robot lors de son déplacement.

L'interpréteur de programmes 200 est chargé d'exécuter les programmes élaborés avec l'environnement de développement. Pour exécuter les instructions de mouvement, il vérifie la validité des paramètres spécifiés par l'utilisateur, puis transmet l'instruction de mouvement 300 au générateur de trajectoire 400. Les instructions de mouvement 300 contiennent les informations issues des valeurs spécifiées dans le programme, à savoir:

- 310 Définition de la géométrie de la trajectoire: Un indicateur indique le type de trajectoire (articulaire ou ligne droite). Si le type est « articulaire », les coordonnées articulaires q0 du point de départ et q1 du point d'arrivée sont données. Si le type est « ligne droite », les coordonnées cartésiennes x0 du point de départ et x1 du point d'arrivée sont données.
- 320 consigne d'effort tangentiel : Il s'agit de la valeur désirée des de la norme de l'effort cartésien exercé par l'extrémité du robot sur son environnement.
- 330 Limite de vitesse: valeur limite vmax pour la norme de la vitesse cartésienne de l'extrémité du robot.
- 340 Limite d'accélération : valeur limite amax pour la norme de l'accélération cartésienne de l'extrémité du robot.

Dans le mode de réalisation décrit ici, les commandes de mouvement 500 sont constituées par les positions angulaires qdes des 6 moteurs. Elles sont mises à jour par le générateur de trajectoire toutes les 4 millisecondes. Chacune des six consignes de position qdes1, qdes2,.. qdes6, est transférée au système d'asservissement correspondant pour chaque moteur 601, 602,... 606 comme représenté à la figure 4.

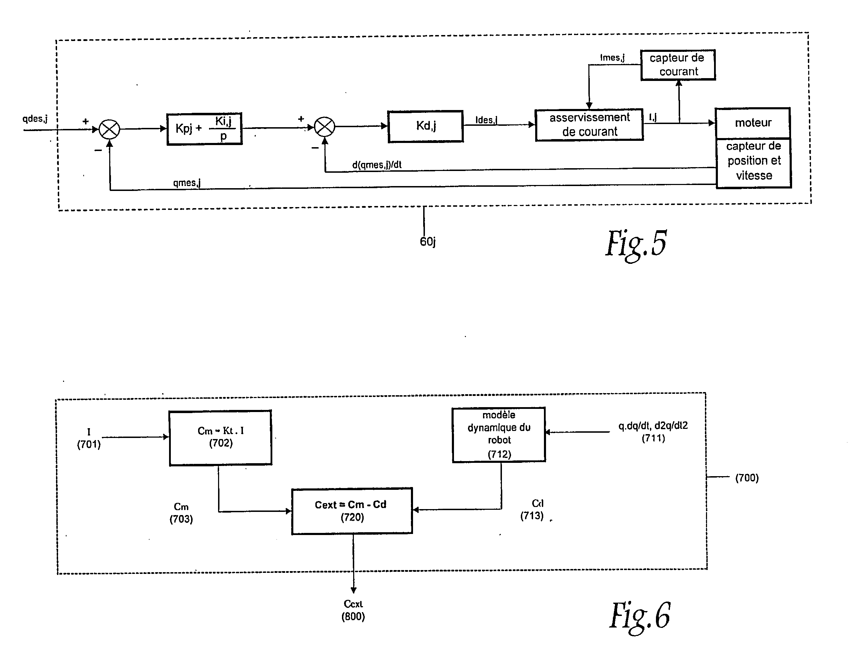

Chaque moteur est équipé d'un capteur de position et de vitesse. L'asservissement sur chaque moteur est de type proportionnel-intégral-dérivé (PID). A la figure 5, qdes,j est la consigne de position sur l'axe j, qmes,j est la position mesurée, Kp,j, Ki,j et Kd,j sont les gains respectifs du PID, Ides,j est la consigne de courant, Imes,j est le courant mesuré, et p est la variable de Laplace.

D'autres techniques d'asservissement en position peuvent aussi être employée dans le cadre de la présente invention. Par exemple, l'asservissement peut être réalisé par la technique dite de découplage et linéarisation. Dans ce cas, l'asservissement n'est plus réalisé axe par axe. Dans notre exemple, les consignes de mouvement 500 sont les positions angulaires désirées pour chaque moteur. On peut aussi utiliser la position et la vitesse désirées de l'organe terminal, exprimées dans des coordonnées cartésiennes. Les consignes de mouvement peuvent encore être des incréments de position successifs, ou bien les vitesses désirées sur chaque moteur à chaque instant. Le point important pour l'invention est que le générateur de trajectoire 400 calcule en temps réel la trajectoire que doit suivre le robot et qu'un système d'asservissement fait en sorte que le robot suive au mieux cette trajectoire.

De nombreux moyens sont possibles pour estimer l'effort exercé par le robot sur l'extérieur dans le cadre de la présente invention. Le plus simple consiste à placer un capteur d'efforts à l'extrémité du robot. Dans ce cas, l'effort extérieur 800 est exprimé dans des coordonnées cartésiennes. On peut aussi utiliser des capteurs d'efforts ou de couples placé à différents endroits sur le robot.

Dans le mode de réalisation proposé et représenté à la figure 6, on présente une solution qui permet d'estimer l'effort extérieur en utilisant des variables de l'asservissement de position.

La méthode utilisée requière une valeur 701 représentant le courant I circulant dans chaque moteur. Dans notre cas, celle-ci est égale à la mesure de courant Imes utilisée dans le système d'asservissement.

$$I = Imes = [Imes,1 \quad Imes,2 \quad … \quad Imes,6]$$

On pourrait aussi bien utiliser la commande de courant, soit

$$I = Ides = [Ides,1 \quad Ides,2 \quad … \quad Ides,6]$$

ou toute autre variable, mesurée ou calculée, représentant les courants circulants dans les moteurs.

Les moteurs utilisés sont des moteurs brushless. Le modèle 702 le plus simple pour ce type de moteur consiste à considérer que le couple délivré Cm 703 est proportionnel au courant traversant le moteur, soit:

$$Cm = Kt \ . \ I$$

Dans cette expression, I et Cm sont des vecteurs contenant les informations relatives à chaque axe et Kt est une matrice diagonale. Des modèles plus complexes pourraient être utilisés en 702.

D'autre part, la méthode utilisée requière des signaux représentant les mouvements du robot 711, par exemple les positions, vitesses, accélérations de chaque moteur représenté respectivement par les vecteurs q, dq/dt et $d^2q/dt^2$. Dans notre cas, ces valeurs sont déduites des mesures capteurs utilisées par le système d'asservissement et leurs dérivées.

$$q = qmes$$

$$dq/dt = d(qmes)/dt$$

$$d^2q/dt^2 = d^2(qmes)/dt^2$$

On pourrait tout aussi utiliser les consignes de positions et leur dérivées: qdes, d(qdes)/dt, $d^2$ (qdes)/dt$^2$.

A partir des ces informations, et d'un modèle dynamique du bras 712 établi, par exemple, avec les équations de Newton-Euler, on calcule un vecteur Cd représentant les couples qu'exercerait en théorie chaque moteur du robot, s'il n'exerçait aucun effort sur l'extérieur 713.

On en déduit, par différence en 720, un vecteur Cext 800 qui est une estimation des couples moteurs correspondant aux efforts exercés par le robot sur son environnement 800 :

$$Cext = Cm - Cd$$

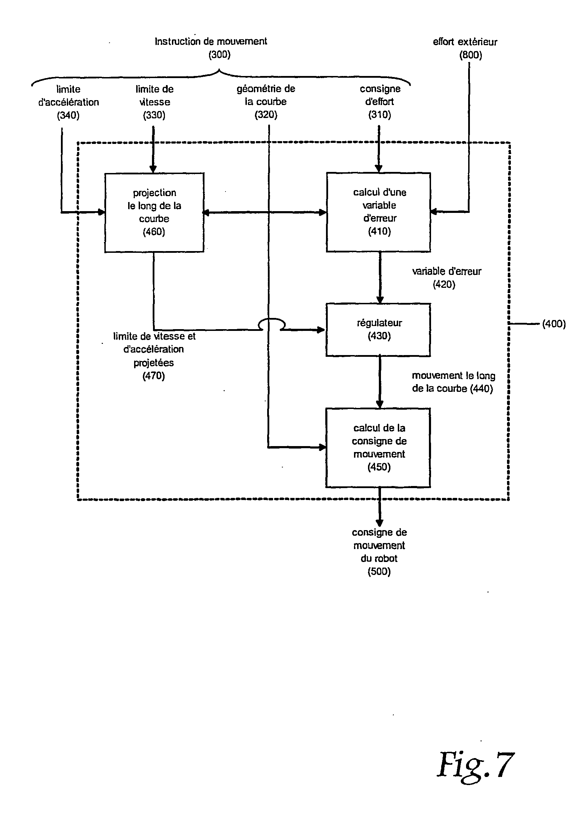

La figure 7 montre comment l'algorithme utilisé par le générateur de trajectoire peut être décomposé en quatre parties :

A partir de la consigne d'effort tangentiel 310, de l'effort extérieur 800 et de la géométrie de la courbe 320, on calcule en 410 une variable d'erreur scalaire 420. Les limitations de vitesse 330 et d'accélération 340 sont projetées en 430 sur la courbe 320. A partir des limites de vitesse et d'accélération projetées 470 ainsi que de la variable d'erreur 420, un régulateur 430 calcule le mouvement désiré le long de la courbe 440. Les consignes de mouvement du robot 500 sont alors calculées en 450 à partir de la définition de la géométrie de la courbe 320 et du mouvement le long de la courbe 440.

Chacune de ces quatre parties est décrite dans ce qui suit.

*A - Calcul de 1a variable d'erreur (410-420) : cas d'un mouvement en ligne droite*

Le calcul de la variable d'erreur 420 est présenté ici dans le cas d'un mouvement en ligne droite. Les calculs qui suivent consistent à calculer la projection sur la courbe 320 de la différence entre la consigne d'effort 310 et l'effort extérieur 800.

Lors d'un mouvement en ligne droite, la position cartésienne x du robot (vecteur) peut être paramétrée de la manière suivante:

$$x = x0 + s.(x1-x0)$$

Où x0 est le position cartésienne de départ du mouvement, x1 est la position cartésienne d'arrivée, et s est un paramètre scalaire compris entre 0 et 1. On peut ré-écrire l'équation précédente sous la forme

$$x = f(s) \qquad\qquad (Eq.\ 1)$$

En dérivant cette équation, on a :

$$v = dx/dt = df/ds\ .\ ds/dt \qquad (Eq.\ 2)$$

Dans cette expression df/ds est un vecteur cartésien tangent à la courbe. Le vecteur cartésien

$$u = (df/ds)\ /\ ||\ df/ds\ ||$$

est unitaire et tangent à la courbe.

Dans notre exemple, la consigne d'effort 300 est la norme de l'effort tangent cartésien. Le vecteur d'effort cartésien désiré vaut donc :

$$Fdes = fdes\ .\ u \qquad\qquad (Eq.\ 3)$$

L'effort extérieur 800 est donné par le vecteur des couples articulaires Cext. On peut transformer cette valeur en coordonnées cartésienne en utilisant la formule suivante :

$$Fext = J^{-t} . Cext \qquad (Eq. 4)$$

où $J^{-t}$ est l'inverse de la transposée de la matrice jacobienne du robot.

La variable de commande choisie 420, notée eps, est la différence entre l'effort tangent désiré et l'effort extérieur, projeté sur la tangente à la trajectoire, soit:

$$eps = u^{t} . (Fdes - Fext)$$

Ce calcul reste valide quel que soit la fonction f utilisée (cercle, spline, ou autre...), dans la mesure où elle est différentiable, ce qui signifie qu'on peut définir sa tangente en tout point.

Ce calcul a été conduit dans le cas particulier où la consigne d'effort 300 est la norme d'un vecteur d'effort cartésien et l'effort extérieur 800 est donné en coordonnées articulaires. En utilisant les formules de changement de coordonnées adéquates, par exemple à la place des équations Eq. 3 et Eq. 4, on peut traiter les cas où les ces information sont données dans n'importe quel système de coordonnées.

*B - Calcul de la variable d'erreur (410-420): cas d'un mouvement articulaire*

Dans le cas d'un mouvement articulaire, la position articulaire q du robot peut être paramétrée de la manière suivante :

$$q = q0 + s.(q1-q0)$$

où q0 est la position articulaire de départ du mouvement, q1 est la position articulaire d'arrivée, et s est un paramètre scalaire compris entre 0 et 1. On peut ré-écrire l'équation précédente sous la forme

$$q = g(s)$$

La position cartésienne correspondante est

$$x = k(q(s))$$

où k est le modèle géométrique direct du robot.

Le mouvement articulaire peut donc se traiter comme le mouvement cartésien, en choisissant la fonction f telle que :

$$f(s) = k(q(s))$$

*C - Projection des limites de vitesse et d'accélération le long de la courbe (460)*

Dans notre exemple, les limites de vitesse sont données en coordonnées cartésiennes. Autrement dit, on souhaite que la norme de la vitesse v du robot soit inférieure à une vitesse donnée vmax, et la norme de l'accélération cartésienne dv/dt soit inférieure à une accélération donnée amax.
On définit les valeurs suivante:

$$(ds/dt)_{max} = min ( vmax / || df/ds || ; c . sqrt(amax / || df/ds ||) (Eq. 5)$$

$$(d^2s/dt^2)_{max} = ( amax - \| df/ds \| \cdot (ds/dt)_{max} ) / \| d^2f/ds^2 \| \quad (Eq. 6)$$

où
c est une constante telle que 0 < c < 1
sqrt() dénote la fonction racine carrée
Supposons qu'on ait :

$$\| ds/dt \| \leq (ds/dt)_{max}$$

$$\| d^2s/dt^2 \| \leq (d^2s/dt^2)_{max}$$

Alors, d'après l'équation Eq. 2, on a :

$$\| v \| = \| df/ds \cdot ds/dt \| = \| df/ds \| \cdot |ds/dt| \leq \| df/ds \| \cdot (ds/dt)_{max}$$

Et donc, d'après l'équation Eq. 5, on a :

$$\| v \| \leq vmax$$

D'autre part, en dérivant l'équation Eq. 2, on a

$$a = df/ds \cdot d^2s/dt^2 + d^2f/ds^2 \cdot (ds/dt)^2$$

donc

$$\| a \| = \| df/ds \cdot d^2s/dt^2 + d^2f/ds^2 \cdot (ds/dt)^2 \|$$
$$\leq \| df/ds \| \cdot | d^2s/dt^2 | + \| d^2f/ds^2 \| \cdot | ds/dt |^2$$
$$\leq \| df/ds \| \cdot (d^2s/dt^2)_{max} | + \| d^2f/ds^2 \| \cdot (ds/dt)_{max}^2$$

En utilisant les définitions des équations Eq. 5 et Eq. 6, on obtient :

$$\| a \| \leq amax$$

Les valeurs $(ds/dt)_{max}$ et $(d^2s/dt^2)_{max}$ définissent donc des contraintes sur les dérivées de s, qui font en sorte que les limites de vitesse et d'accélération cartésiennes sont vérifiées. On peut donc considérer que ce sont les projections des limites de vitesse et d'accélération cartésienne dans les coordonnées de s.
De manière similaire, on pourrait avoir des limitations de vitesse et/ou d'accélération articulaire en utilisant la fonction $h(s) = k^{-1}(f(s))$ à la place de la fonction f dans les calculs précédents.

*D - Régulateur (430)*

Le régulateur 430 a pour rôle de générer des mouvements le long de la courbe 440, de manière à maintenir la variable d'erreur la plus proche de zéro 420.
Le régulateur utilisé est de type intégral. Un régulateur intégral « classique » peut s'exprimer sous la forme suivante :

$$d(sdes)/dt = K \cdot eps$$

$$sdes = \int d(sdes)/dt \cdot dt$$

où sdes est la position désirée du robot le long de la courbe, exprimée dans les unités du paramètre s de l'équation Eq. 1, et K une constante. Ceci est représenté sur le schéma-block suivant, où p désigne la variable de Laplace.

Ce schéma est équivalent à :

Pour intégrer les limitations de vitesse et d'accélération, on modifie le schéma de la manière suivante.

Les blocs « calcul $(ds/dt)_{max}$ » et « calcul $(d^2s/dt^2)_{max}$ » calculent les limites de vitesse et d'accélération projetées, en fonction de sdes, selon les équation Eq. 5 et Eq. 6 ($df/ds$ et $d^2f/ds^2$ sont évaluées pour $s = sdes$). Le bloc satVel sature la vitesse z en entrée en fonction de $(ds/dt)_{max}$. Autrement dit, on a :

$$d(sdes)/dt = \begin{cases} (ds/dt)_{max} & si \quad z \;>\; (ds/dt)_{max} \\ z & si \quad |\,z\,| \;\leq\; (ds/dt)_{max} \\ -\,(ds/dt)_{max} & si \quad z \;<\; -\,(ds/dt)_{max} \end{cases}$$

De même, satAccel sature l'accélération u en fonction de $(d^2s/dt^2)_{max}$, soit:

$$w = \begin{cases} (d^2s/dt^2)_{max} & si \quad u \;>\; (d^2s/dt^2)_{max} \\ u & si \quad |\,u\,| \;\leq\; (d^2s/dt^2)_{max} \\ -\,(d^2s/dt^2)_{max} & si \quad u \;<\; -\,(d^2s/dt^2)_{max} \end{cases}$$

Dans tous les cas, ce schéma assure que :

$$|\; d(sdes)/dt \;| \;<\; (ds/dt)_{max}$$

ce qui garantit que la norme de la vitesse cartésienne désirée le long de la trajectoire est inférieure à vmax.

Lorsque la vitesse maximale n'est pas atteinte, on a

$$z = d(sdes)/dt$$

donc

$$w = d^2(sdes)/dt^2$$

alors,

$$|\; d^2(sdes)/dt^2 \;| \;<\; (d^2s/dt^2)_{max}$$

ce qui garantit que la norme de l'accélération cartésienne est inférieure à amax.

Dans un cadre général, l'algorithme présenté assure que la limite de vitesse cartésienne est toujours respectée et que la limite d'accélération est respectée dans la mesure où la vitesse cartésienne maximales n'est pas atteinte. Dans le cas de la ligne droite, lorsque la limite de vitesse est atteinte, l'accélération est nulle, donc la limite d'accélération est respectée.

*E - Calcul (430) des consignes de mouvement (500)*

Dans notre cas, les consignes de mouvement 500 sont les coordonnées articulaires du robot qdes. A partir de la position désirée le long de la courbe sdes, on peut calculer la consigne de position cartésienne correspondante, grâce à l'équation paramétrique de la courbe Eq. 1.

$$xdes = f(sdes)$$

Ensuite, on trouve les coordonnées articulaires grâce au modèle géométrique inverse du robot, noté $k^{-1}$.

$$qdes = k^{-1}(xdes)$$

Si les consignes de mouvement étaient des vitesses, on pourrait utiliser les changements de coordonnées correspondant sur les vitesses (Equation Eq. 2 et inverse de la matrice jacobienne du robot).

**Revendications**

1.  Procédé de commande des déplacements d'une partie mobile d'un robot multi-axes le long d'une trajectoire, ce procédé comprenant une étape consistant à :

    - fournir à un générateur de trajectoire (400) des instructions de mouvement (300) incluant au moins des informations relatives à la géométrie de la trajectoire (320) et à des consignes d'effort (310) ;

    **caractérisé en ce qu'**il comprend des étapes consistant à :

    - calculer un signal (800) dit d'effort extérieur représentant au moins une composante de l'effort (F) exercé par ladite partie mobile (O) sur son environnement ;
    - fournir, à une fréquence d'échantillonnage prédéterminée, ledit signal d'effort extérieur (800) audit générateur de trajectoire (400) ;
    - calculer, au moyen dudit générateur de trajectoire (400) et à une fréquence d'échantillonnage prédéterminée, des consignes de mouvement (500) le long de ladite trajectoire (320) de façon à minimiser l'écart entre la projection ($F_T$) de l'effort extérieur sur la tangente (T) à la trajectoire et la projection de la consigne sur ladite tangente et
    - fournir lesdites consignes de mouvement (500) à un moyen d'asservissement (601-606) qui permet de mettre en mouvement au moins un axe dudit robot (600) conformément auxdites consignes de mouvement (500).

2.  Procédé selon la revendication 1, **caractérisé en ce que** ledit signal d'effort extérieur (800) est calculé à partir d'une information représentant le courant circulant dans au moins un actionneur (601-606) dudit robot (600).

3.  Procédé selon l'une des revendications précédentes, **caractérisé en ce qu'**il comprend une étape consistant à utiliser un modèle dynamique (712) dudit robot (600) lors du calcul dudit signal d'effort extérieur (800).

4.  Procédé selon l'une des revendications précédentes, **caractérisé en ce qu'**il comprend une étape consistant à fournir audit générateur de trajectoire (400) au moins une valeur limite de vitesse (330) et/ou une valeur limite d'accélération (340) pour prise en compte lors du calcul desdites consignes de mouvement (500), de telle sorte que lesdites consignes soient conforme à ladite ou auxdites valeurs limites.

5.  Dispositif de commande des déplacements d'une partie mobile d'un robot multiaxes le long d'une trajectoire, ce dispositif comprenant un générateur de trajectoire (400) apte à calculer des consignes de mouvement (500) en fonction d'instructions de mouvements (300) incluant au moins des informations relatives à la géométrie de la trajectoire (320) et à des consignes d'effort (310) **caractérisé en ce qu'**il comprend un estimateur d'effort (700) apte à générer un signal d'effort extérieur (800) représentant au moins une composante de l'effort (F) exercé par ladite partie mobile (O) sur son environnement et à fournir ledit signal audit générateur de trajectoire, à une fréquence d'échantillonnage prédéterminée, alors que ledit générateur de trajectoire est apte à calculer lesdites consignes de mouvement (500) le long de ladite trajectoire (320), à une fréquence d'échantillonnage prédéterminée, de façon à minimiser l'écart entre la projection ($F_T$) de l'effort extérieur sur la tangente (T) à la trajectoire et la projection de la consigne d'effort sur ladite tangente, lesdites consignes de mouvement (500) étant fournies à un moyen d'asservissement (601-606) permettant de mettre en mouvement au moins un axe dudit robot (600).

**6.** Dispositif selon la revendication 5, **caractérisé en ce qu'**il comprend un moyen interpréteur de programme (200) apte à exécuter des programmes qui comportent des instructions de mouvement (300) permettant de spécifier au moins la géométrie de la trajectoire (320) et des consignes d'effort (310).

**Claims**

**1.** Method for controlling the displacements of a movable part of a multi-axis robot along a path, this method comprising a step consisting in:

- providing movement instructions (300) to a path generator (400), the instructions including at least information relating to the geometry of the path (320) and to force setpoints (310);

**characterized in that** it comprises steps consisting in:

- calculating an external force signal (800) representing at least one component of the force (F) exerted by said movable part (O) on its environment;
- providing said external force signal (800) to said path generator (400) at a predetermined sampling frequency;
- calculating, by means of said path generator (400) and at a predetermined sampling frequency, movement setpoints (500) along said path (320) so as to minimize the difference between the projection ($F_T$) of the external force onto the tangent (T) to the path and the projection of the setpoint onto said tangent and
- providing said movement setpoints (500) to a servo-control means (601-606) enabling at least one axis of said robot (600) to be set into movement in compliance with said movement setpoints (500).

**2.** Method according to Claim 1, **characterized in that** said external force signal (800) is calculated from information representing the current flowing in at least one actuator (601-606) of said robot (600).

**3.** Method according to one of the preceding claims, **characterized in that** it comprises a step consisting in using a dynamic model (712) of said robot (600) when calculating said external force signal (800).

**4.** Method according to one of the preceding claims, **characterized in that** it comprises a step consisting in providing said path generator (400) with at least one velocity limit value (330) and/or one acceleration limit value (340) for taking into account when calculating said movement setpoints (500), such that said setpoints comply with said limit value(s).

**5.** Device for controlling the displacements of a movable part of a multi-axis robot along a path, this device comprising a path generator (400) suitable for calculating movement setpoints (500) as a function of movement instructions (300) including at least information relating to the geometry of the path (320) and to its force setpoints (310) **characterized in that** it comprises a force estimator (700) suitable for generating an external force signal (800) representing at least one component of the force (F) exerted by said movable part (O) on its environment and for providing said signal to said path generator at a predetermined sampling frequency, while said path generator is suitable for calculating said movement setpoints (500) along said path (320) at a predetermined sampling frequency so as to minimize the difference between the projection ($F_T$) of the external force onto the tangent (T) to the path and the projection of the force setpoint onto said tangent, said movement setpoints (500) being provided to a servo-control means (601-606) enabling at least one axis of said robot (600) to be set into movement.

**6.** Device according to Claim 5, **characterized in that** it comprises program interpreter means (200) suitable for executing programs containing movement instructions (300) enabling at least the geometry of the path (320) and force setpoints (310) to be specified.

**Patentansprüche**

**1.** Verfahren zur Steuerung der Bewegungen eines beweglichen Teils eines Mehrachsenroboters entlang einer Bahn, wobei dieses Verfahren einen Schritt umfasst, der darin besteht:

- einem Bahngenerator (400) Bewegungsbefehle (300) zu liefern, die mindestens Informationen bezüglich der Geometrie der Bahn (320) und bezüglich Kraftsollwerten (310) einschließen;

**dadurch gekennzeichnet, dass** es Schritte umfasst, die darin bestehen:

- ein Signal (800), genannt äußeres, Kraftsignal zu berechnen, das mindestens eine Kraftkomponente (F) repräsentiert, die von dem beweglichen Teil (O) auf seine Umgebung ausgeübt wird;
- das äußere Kraftsignal (800) bei einer vorbestimmten Taktfrequenz an den Bahngenerator (400) zu liefern;
- mit Hilfe des Bahngenerators (400) und bei einer vorbestimmten Taktfrequenz Bewegungssollwerte (500) entlang der Bahn (320) zu berechnen, um den Abstand zwischen der Projektion ($F_T$) der äußeren Kraft auf die Tangente (T) zur Bahn und der Projektion des Sollwerts auf die Tangente zu minimieren, und
- die Bewegungssollwerte (500) an ein Steuermittel (601 - 606) zu liefern, das mindestens eine Achse des Roboters (600) entsprechend den Bewegungssollwerten (500) in Bewegung zu setzen ermöglicht.

2. Verfahren nach Anspruch 1, **dadurch gekennzeichnet, dass** das äußere Kraftsignal (800) aus einer Information berechnet wird, die den in mindestens einem Betätigungselement (601 - 606) des Roboters (600) fließenden Strom repräsentiert.

3. Verfahren nach einem der vorhergehenden Ansprüche, **dadurch gekennzeichnet, dass** es einen Schritt umfasst, der darin besteht, ein dynamisches Modell (712) des Roboters (600) bei der Berechnung des äußeren Kraftsignals (800) zu verwenden.

4. Verfahren nach einem der vorhergehenden Ansprüche, **dadurch gekennzeichnet, dass** es einen Schritt umfasst, der darin besteht, dem Bahngenerator (400) mindestens einen Geschwindigkeitsgrenzwert (330) und/oder einen Beschleunigungsgrenzwert (340) zur Berücksichtigung bei der Berechnung der Bewegungssollwerte (500) zu liefern, derart, dass die Sollwerte dem oder den Grenzwerten konform sind.

5. Vorrichtung zur Steuerung der Bewegungen eines beweglichen Teils eines Mehrachsenroboters entlang einer Bahn, wobei die Vorrichtung einen Bahngenerator (400) umfasst, der geeignet ist, Sollwerte der Bewegung (500) abhängig von Bewegungsbefehlen (300) zu berechnen, die mindestens Informationen bezüglich der Bahngeometrie (320) und Kraftsollwerten (310) einschließen,
**dadurch gekennzeichnet, dass** sie eine Kraft-Schätzeinrichtung (700) umfasst, die geeignet ist, ein äußeres Kraftsignal (800) zu erzeugen, das mindestens eine Kraftkomponente (F) repräsentiert, die von dem beweglichen Teil (O) auf seine Umgebung ausgeübt wird, und das Signal dem Bahngenerator bei einer vorbestimmten Taktfrequenz zu liefern, wobei der Bahngenerator geeignet ist, die Sollwerte der Bewegung (500) entlang der Bahn (320) bei einer vorbestimmten Taktfrequenz zu berechnen, um den Abstand zwischen der Projektion ($F_T$) der äußeren Kraft auf die Tangente (T) zur Bahn und der Projektion des Kraftsollwerts auf die genannte Tangente zu minimieren, wobei die Bewegungssollwerte (500) an ein Steuermittel (601 - 606) geliefert werden, das mindestens eine Achse des Roboters (600) in Bewegung zu setzen erlaubt.

6. Vorrichtung nach Anspruch 5, **dadurch gekennzeichnet, dass** sie ein Programminterpretermittel (200) umfasst, das geeignet ist, Programme auszuführen, die Bewegungsbefehle (300) umfassen, die mindestens die Geometrie der Bahn (320) und Kraftsollwerte (310) zu spezifiziere gestatten.

Fig.1

Fig.2

14

*Fig.3*

*Fig.4*

Fig.5

Fig.6

Instruction de mouvement
(300)

effort extérieur
(800)

limite
d'accélération
(340)

limite de
vitesse
(330)

géométrie de
la courbe
(320)

consigne
d'effort
(310)

projection
le long de la
courbe
(460)

calcul d'une
variable
d'erreur
(410)

variable d'erreur
(420)

limite de vitesse et
d'accélération
projetées
(470)

régulateur
(430)

(400)

mouvement le long
de la courbe (440)

calcul de la
consigne de
mouvement
(450)

consigne de
mouvement
du robot
(500)

*Fig.7*

17

**EP 1 695 160 B1**

## RÉFÉRENCES CITÉES DANS LA DESCRIPTION

**Documents brevets cités dans la description**

- US 5742138 A
- US 4874997 A
- EP 0349291 A